# EUROPÄISCHE PATENTSCHRIFT

(11) **EP 3 832 037 B1**
(45) Veröffentlichungstag und Bekanntmachung des Hinweises auf die Patenterteilung: **15.05.2024**
(21) Anmeldenummer: 20196855.9
(22) Anmeldetag: 18.09.2020
(51) Int. Cl.: E03C 1/04, F16K 11/078, F16K 11/00

(54) **EINHEBELMISCHKARTUSCHE FÜR EINE SANITÄRARMATUR**
SINGLE LEVER MIXING CARTRIDGE FOR A SANITARY FITTING
CARTOUCHE MÉLANGEUSE À UN SEUL LEVIER POUR UNE ROBINETTERIE SANITAIRE

(30) Priorität: 06.12.2019 DE 102019133397
(43) Veröffentlichungstag der Anmeldung: 09.06.2021
(73) Patentinhaber: Grohe AG, 58653 Hemer (DE)
(72) Erfinder: GAIDA, Waldemar, 40549 Düsseldorf (DE); JÄCKEL, Dirk, 44263 Dortmund (DE); KUKLA, Sebastian, 44789 Bochum (DE)

(56) Entgegenhaltungen:
- WO-A1-2013/056350
- WO-A1-2015/101880
- DE-A1- 4 324 600
- DE-U1-202018 103 768
- US-A- 5 095 945

## Beschreibung

Die vorliegende Erfindung betrifft eine Einhebelmischkartusche für eine Sanitärarmatur sowie eine Sanitärarmatur mit einer entsprechenden Einhebelmischkartusche. Einhebelmischkartuschen werden insbesondere für Sanitärarmaturen nach Art eines Einhebelmischers verwendet und dienen dem Mischen eines Kaltwassers und Warmwassers zu einem Mischwasser mit einer gewünschten Mischwassertemperatur. Mittels Sanitärarmaturen ist das Mischwasser insbesondere an Waschbecken, Spülbecken, Duschen und/oder Badewannen bereitstellbar.

Einhebelmischer weisen regelmäßig einen (einzigen) Bedienhebel zur Einstellung der Mischwassertemperatur und einer Abgabemenge des Mischwassers auf und sind daher einhändig und/oder besonders komfortabel bedienbar. Die Temperatur des dem Einhebelmischer zugeführten Warmwassers ist häufig nicht konstant, sondern kann, beispielsweise im Tagesverlauf, Schwankungen unterliegen. Hierdurch schwankt selbst bei identischer Stellung des Bedienhebels die Mischwassertemperatur des durch den Einhebelmischer hergestellten Mischwassers. Ein Benutzer des Einhebelmischers kann sich somit nicht darauf verlassen, bei einer bestimmten Stellung des Bedienhebels Mischwasser mit der gewünschten Mischwassertemperatur zu zapfen, sondern muss die Mischwassertemperatur über den Bedienhebel regelmäßig nachjustieren. Zudem ist nachteilig, dass eine Gefahr von Verbrühungen besteht, wenn dem Einhebelmischer Warmwasser mit besonders hohen Warmwassertemperaturen zugeführt wird. Auch normal temperiertes Warmwasser kann bereits zu Verbrühungen führen. Zudem können Druckschwankungen des Kaltwassers oder ein Ausfall des zugeführten Kaltwassers zu Gefahren führen.

Es ist daher bereits bekannt, einem Warmwassereinlass einer Einhebelmischkartusche ein Thermostatventil vorzuordnen, durch das dem Warmwassereinlass der Einhebelmischkartusche Warmwasser mit einer vorgegebenen Warmwassertemperatur zuführbar ist. Hierzu mischt das Thermostatventil das Warmwasser vorab mit Kaltwasser, um eine konstante Warmwassertemperatur zu erhalten. Das derart vorgemischte Warmwasser wird anschließend dem Warmwassereinlass der Einhebelmischkartusche zugeführt. Nachteilig ist, dass durch die Einhebelmischkartusche hierdurch lediglich Mischwasser mit einer Mischwassertemperatur mischbar ist, die maximal der Temperatur des vorgemischten Warmwassers entspricht. Die durch die Mischkartusche erzeugbare Mischwassertemperatur des Mischwassers deckt somit nicht den vollständigen Temperaturbereich ab, den die Vorlauftemperatur des (nicht vorgemischten) Warmwassers ohne Vorschaltung des Thermostatventils ermöglichen würde.

Aus der WO 2015/101880 A1 ist eine Einhebelmischkartusche für eine Sanitärarmatur zum Mischen von Kalt- und Warmwasser bekannt geworden. Auch aus der WO 2013/056350 A1 ist eine entsprechende Einhebelmischkartusche für eine Sanitärarmatur bekannt.

Aufgabe der Erfindung ist es daher, die mit Bezug auf den Stand der Technik geschilderten Probleme zumindest teilweise zu lösen und insbesondere eine Einhebelmischkartusche für eine Sanitärarmatur anzugeben, durch die Mischwasser mit einer konstanteren Mischwassertemperatur, einer höheren Mischwassertemperatur und gleichzeitig mit einer geringeren Verbrühungsgefahr erzeugbar ist. Zudem soll eine Sanitärarmatur angegeben werden, durch die Mischwasser mit einer konstanteren Mischwassertemperatur, einer höheren Mischwassertemperatur und gleichzeitig mit einer geringeren Verbrühungsgefahr zapfbar ist.

Diese Aufgaben werden gelöst mit einer Einhebelmischkartusche gemäß den Merkmalen des unabhängigen Anspruchs 1. Weitere vorteilhafte Ausgestaltungen der Erfindung sind in den abhängigen Patentansprüchen angegeben.

Darüber hinaus werden die in den Patentansprüchen angegebenen Merkmale in der Beschreibung näher präzisiert und erläutert, wobei weitere bevorzugte Ausgestaltungen der Erfindung dargestellt werden.

Die Einhebelmischkartusche ist insbesondere für eine Sanitärarmatur verwendbar, die nach Art eines Einhebelmischers ausgebildet ist, und/oder dient der Erzeugung eines Mischwassers mit einer gewünschten Mischwassertemperatur. Weiterhin ist die Einhebelmischkartusche insbesondere zumindest teilweise in einem Armaturengehäuse der Sanitärarmatur anordenbar. Hierzu weist die Einhebelmischkartusche ein Gehäuse auf, dass insbesondere zumindest teilweise aus Kunststoff besteht und/oder zumindest teilweise zylinderförmig ausgebildet ist. In dem Gehäuse ist zumindest teilweise ein Stellhebel beweglich befestigt, welcher der Betätigung der Einhebelmischkartusche dient. Der Stellhebel ist hierzu insbesondere mit einem Bedienhebel der Sanitärarmatur, beispielsweise mittels einer Schraubverbindung oder Steckverbindung, verbindbar. Der Stellhebel kann, insbesondere zur Einstellung einer Mischwassertemperatur, um eine Drehachse drehbar und/oder, insbesondere zur Einstellung einer Abgabemenge des Mischwassers, um eine (insbesondere orthogonal zu der Drehachse verlaufende) Schwenkachse schwenkbar sein.

Weiterhin weist die Einhebelmischkartusche eine feststehende Steuerscheibe und eine bewegliche Steuerscheibe auf. Die feststehende Steuerscheibe und die bewegliche Steuerscheibe sind jeweils insbesondere flach bzw. scheibenförmig ausgebildet. Weiterhin können die feststehende Steuerscheibe und die bewegliche Steuerscheibe zumindest teilweise aus Keramik bestehen. Die feststehende Steuerscheibe ist fest (insbesondere gegenüber dem Gehäuse nicht verschieblich oder nicht drehbar) in dem Gehäuse angeordnet, wohingegen die bewegliche Steuerscheibe durch den Stellhebel auf der feststehenden Steuerscheibe bewegbar (insbesondere gegenüber dem Gehäuse drehbar) ist.

Die feststehende Steuerscheibe weist einen Kaltwassereinlass für Kaltwasser und einen Warmwassereinlass für Warmwasser auf. Eine Kaltwassertemperatur des Kaltwassers beträgt insbesondere maximal 25 °C (Celsius), bevorzugt 1 °C bis 25 °C, besonders bevorzugt 5 °C bis 20 °C und/oder eine Warmwassertemperatur des Warmwassers insbesondere maximal 90 °C, bevorzugt 25 °C bis 90 °C, besonders bevorzugt 55 °C bis 65 °C. Weiterhin weist die feststehende Steuerscheibe einen Mischwassereinlass für vorgemischtes Wasser auf. Das vorgemischte Wasser kann aus dem Kaltwasser und Warmwasser vorgemischt sein und/oder eine konstante Temperatur aufweisen. Die Temperatur des vorgemischten Wassers kann bevorzugt 30 °C bis 50 °C, besonders bevorzugt (circa) 38 °C betragen. Über den Kaltwassereinlass kann das Kaltwasser, über den Warmwassereinlass kann das Warmwasser und über den Mischwassereinlass kann das vorgemischte Wasser insbesondere in eine (gemeinsame) Mischkammer der Einhebelmischkartusche strömen.

Die Mischkammer kann insbesondere zumindest teilweise in bzw. mit der beweglichen Steuerscheibe ausgebildet sein. Innerhalb der Mischkammer ist das Kaltwasser, Warmwasser und/oder vorgemischte Wasser mischbar, sodass das Mischwasser in einer gewünschten Mischwassertemperatur entsteht. Das Einströmen des Kaltwassers, Warmwassers und vorgemischten Wassers in die Mischkammer ist durch eine Betätigung der beweglichen Steuerscheibe über den Stellhebel einstellbar.

Die bewegliche Steuerscheibe ist durch den Stellhebel auf der feststehenden Steuerscheibe zwischen einer ersten äußeren Drehstellung und einer zweiten äußeren Drehstellung drehbar. Ein Drehwinkel zwischen der ersten äußeren Drehstellung und der zweiten äußeren Drehstellung kann insbesondere 60° bis 120°, bevorzugt 80° bis 100° oder besonders bevorzugt (circa) 90° betragen. Weiterhin ist die bewegliche Steuerscheibe durch den Stellhebel auf der feststehenden Steuerscheibe in eine mittlere Drehstellung drehbar, die sich (insbesondere genau) zwischen der ersten äußeren Drehstellung und zweiten äußeren Drehstellung befindet.

In der ersten äußeren Drehstellung verbindet die Mischkammer den Kaltwassereinlass der feststehenden Steuerscheibe mit einem Mischwasserauslass. Der Mischwasserauslass ist insbesondere ebenfalls in der feststehenden Steuerscheibe ausgebildet. In der ersten äußeren Drehstellung der beweglichen Steuerscheibe fluchtet die Mischkammer in Richtung einer Drehachse der beweglichen Steuerscheibe betrachtet insbesondere zumindest teilweise mit dem Kaltwassereinlass der feststehenden Steuerscheibe und dem Mischwasserauslass. Hierdurch kann das Kaltwasser über den Kaltwassereinlass in die Mischkammer strömen und die Mischkammer über den Mischwasserauslass verlassen. Der Mischwassereinlass und der Warmwassereinlass sind in der ersten äußeren Drehstellung der beweglichen Steuerscheibe durch die bewegliche Steuerscheibe insbesondere verschlossen, sodass kein vorgemischtes Wasser und Warmwasser in die Mischkammer strömen können. In der ersten äußeren Drehstellung erzeugt die Einhebelmischkartusche daher ein Mischwasser, dessen Mischwassertemperatur der Kaltwassertemperatur des Kaltwassers entspricht. Somit handelt es sich im weiteren Sinne um Mischwasser, da es sich bei dem Mischwasser in der ersten äußeren Drehstellung der beweglichen Steuerscheibe lediglich um das Kaltwasser handelt.

In der mittleren Drehstellung verbindet die Mischkammer den Mischwassereinlass mit dem Mischwasserauslass. Hierbei fluchtet die Mischkammer in Richtung der Drehachse der beweglichen Steuerscheibe betrachtet insbesondere zumindest teilweise mit dem Mischwassereinlass der feststehenden Steuerscheibe und dem Mischwasserauslass. Hierdurch kann das vorgemischte Wasser über den Mischwassereinlass in die Mischkammer strömen und die Mischkammer über den Mischwasserauslass verlassen. Der Kaltwassereinlass und der Warmwassereinlass sind in der mittleren Drehstellung der beweglichen Steuerscheibe durch die bewegliche Steuerscheibe insbesondere verschlossen, sodass kein Kaltwasser und Warmwasser in die Mischkammer strömen können. In der mittleren Drehstellung erzeugt die Einhebelmischkartusche daher ein Mischwasser, dessen Mischwassertemperatur der Temperatur des vorgemischten Wassers entspricht.

In der zweiten äußeren Drehstellung verbindet die Mischkammer den Warmwassereinlass mit dem Mischwasserauslass. Hierbei fluchtet die Mischkammer in Richtung der Drehachse der beweglichen Steuerscheibe betrachtet insbesondere zumindest teilweise mit dem Warmwassereinlass der feststehenden Steuerscheibe und dem Mischwasserauslass. Hierdurch kann das Warmwasser über den Warmwassereinlass in die Mischkammer strömen und die Mischkammer über den Mischwasserauslass verlassen. Der Kaltwassereinlass und der Mischwassereinlass sind in der zweiten äußeren Drehstellung der beweglichen Steuerscheibe durch die bewegliche Steuerscheibe insbesondere verschlossen, sodass kein Kaltwasser und vorgemischtes Wasser in die Mischkammer strömen können. In der zweiten äußeren Drehstellung erzeugt die Einhebelmischkartusche daher ein Mischwasser, dessen Mischwassertemperatur der Warmwassertemperatur des Warmwassers entspricht.

Die Einhebelmischkartusche erlaubt in der mittleren Drehstellung der beweglichen Steuerscheibe die Erzeugung eines Mischwassers mit einer vorgegebenen und konstanten Mischwassertemperatur, weil der Einhebelmischkartusche über den Mischwassereinlass das vorgemischte Wasser mit konstanter Temperatur zuführbar ist. Zudem besteht in der ersten äußeren Drehstellung bis zu der mittleren Drehstellung keine Verbrühgefahr, weil die Mischwassertemperatur maximal der Temperatur des vorgemischten Wassers entsprechen kann. Gleichzeitig ist in der zweiten äußeren Drehstellung Mischwasser mit einer Mischwassertemperatur erzeugbar, die der Warmwassertemperatur bzw. Vorlauftemperatur des Warmwassers entspricht, sodass Mischwasser mit einer Mischwassertemperatur erzeugbar ist, die den gesamten verfügbaren Temperaturbereich abdeckt.

Der Mischwassereinlass ist mit einer Mischvorrichtung verbunden, mittels der eine Temperatur des vorgemischten Wassers einstellbar ist. Die Mischvorrichtung kann beispielsweise ebenfalls zumindest teilweise in einem Armaturengehäuse der Sanitärarmatur anordenbar sein. Weiterhin ist die Mischvorrichtung in einer Strömungsrichtung des vorgemischten Wassers stromaufwärts zu dem Mischwassereinlass der Einhebelmischkartusche angeordnet. Der Mischvorrichtung ist insbesondere Kaltwasser und Warmwasser zuführbar, das durch die Mischvorrichtung zu dem vorgemischten Wasser mit einer konstanten Temperatur mischbar ist. Das vorgemischte Wasser ist somit insbesondere thermostatisch vorgemischt. Zudem kann die Temperatur des durch die Mischvorrichtung erzeugten vorgemischten Wassers insbesondere einstellbar sein.

Bei der Mischvorrichtung handelt es sich um ein Thermostatventil.

In einer Drehstellung der beweglichen Steuerscheibe kann zwischen der ersten äußeren Drehstellung und der mittleren Drehstellung Kaltwasser und vorgemischtes Wasser in der Mischkammer zu dem Mischwasser mischbar sein. Hierzu kann die Mischkammer zwischen der ersten äußeren Drehstellung unter mittleren Drehstellung der beweglichen Steuerscheibe in Richtung der Drehachse der beweglichen Steuerscheibe betrachtet zumindest teilweise mit dem Kaltwassereinlass, dem Mischwassereinlass und dem Mischwasserauslass fluchten. Hierdurch kann das Kaltwasser und das vorgemischte Wasser in die Mischkammer strömen und als Mischwasser die Mischkammer über den Mischwasserauslass verlassen.

In einer Drehstellung der beweglichen Steuerscheibe zwischen der mittleren Drehstellung und der zweiten äußeren Drehstellung kann vorgemischtes Wasser und Warmwasser in der Mischkammer zu dem Mischwasser mischbar sein. Hierzu kann die Mischkammer zwischen der mittleren Drehstellung und der zweiten äußeren Drehstellung der beweglichen Steuerscheibe in Richtung der Drehachse der beweglichen Steuerscheibe betrachtet zumindest teilweise mit dem Mischwassereinlass, dem Warmwassereinlass und dem Mischwasserauslass fluchten. Hierdurch kann das vorgemischte Wasser und das Warmwasser in die Mischkammer strömen und als Mischwasser die Mischkammer über den Mischwasserauslass verlassen.

Ein Mischungsverhältnis zwischen dem Kaltwasser und dem vorgemischten Wasser oder zwischen dem vorgemischten Wasser und dem Warmwasser kann stufenlos einstellbar sein.

Die bewegliche Steuerscheibe kann durch den Stellhebel zum Einstellen einer Durchflussmenge des Mischwassers durch den Mischwasserauslass auf der feststehenden Steuerscheibe verschiebbar sein. Die Verschiebung erfolgt insbesondere in einer zur Drehachse der beweglichen Steuerscheibe radialen Richtung.

Die Einhebelmischkartusche kann ein Sicherheitselement aufweisen, mit dem ein unbeabsichtigtes Verstellen der beweglichen Steuerscheibe von der mittleren Drehstellung in die zweite äußere Drehstellung verhinderbar ist. Das Sicherheitselement kann insbesondere derart ausgebildet sein, dass ein Verstellen der beweglichen Steuerscheibe von der mittleren Drehstellung in die zweite äußere Drehstellung nur mit hoher Kraft durch Überwinden eines Widerstands oder durch eine bewusste Entsicherung und/oder Deaktivierung des Sicherheitselements möglich ist.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: eine Sanitärarmatur;
- Fig. 2:: eine Einhebelmischkartusche der Sanitärarmatur im Längsschnitt;
- Fig. 3:: die Einhebelmischkartusche der Sanitärarmatur in einer perspektivischen Darstellung;
- Fig. 4:: eine bewegliche Steuerscheibe und unbewegliche Steuerscheibe der Einhebelmischkartusche in einer ersten Betriebsstellung;
- Fig. 5:: die bewegliche Steuerscheibe und unbewegliche Steuerscheibe der Einhebelmischkartusche in einer zweiten Betriebsstellung;
- Fig. 6:: die bewegliche Steuerscheibe und unbewegliche Steuerscheibe der Einhebelmischkartusche in einer dritten Betriebsstellung;
- Fig. 7:: die bewegliche Steuerscheibe und unbewegliche Steuerscheibe der Einhebelmischkartusche in einer vierten Betriebsstellung; und
- Fig. 8:: die bewegliche Steuerscheibe und unbewegliche Steuerscheibe der Einhebelmischkartusche in einer fünften Betriebsstellung.

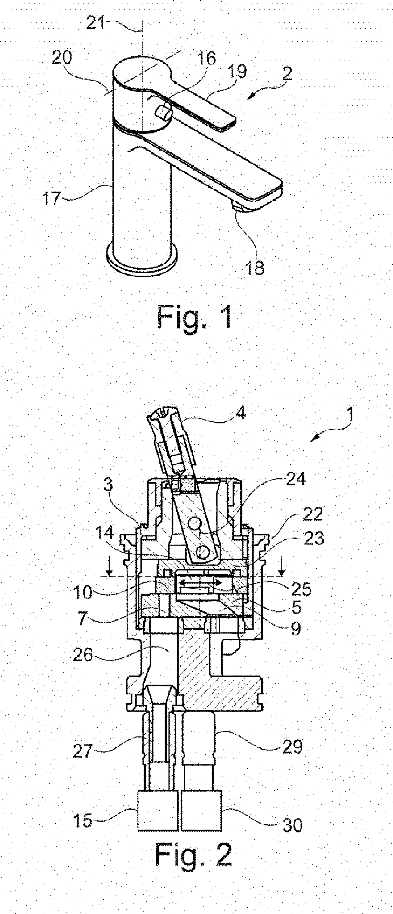

Die Fig. 1 zeigt eine Sanitärarmatur 2 in einer perspektivischen Darstellung. Die Sanitärarmatur 2 umfasst ein Armaturengehäuse 17 mit einer Auslauföffnung 18, über die ein Mischwasser abgebbar ist. Weiterhin umfasst die Sanitärarmatur 2 einen Bedienhebel 19, der zur Steuerung einer Abgabemenge des Mischwassers um eine horizontale Achse 20 schwenkbar und zur Einstellung einer Mischwassertemperatur des Mischwassers um eine vertikale Achse 21 drehbar ist. Hierzu ist der Bedienhebel 19 mit einem in der Fig. 2 gezeigten Stellhebel 4 einer Einhebelmischkartusche 1 verbunden.

Die Fig. 2 zeigt die Einhebelmischkartusche 1 der in der Fig. 1 gezeigten Sanitärarmatur 2 in einem Längsschnitt. Die Einhebelmischkartusche 1 ist in der Fig. 2 in einen Kartuschenadapter 22 eingesteckt, mit dem die Einhebelmischkartusche 1 in dem in der Fig. 1 gezeigten Armaturengehäuse 17 der Sanitärarmatur 2 angeordnet ist. Die Einhebelmischkartusche 1 umfasst ein Gehäuse 3, in dem eine feststehende Steuerscheibe 5 angeordnet ist. Zu erkennen sind in der Fig. 2 ein Mischwassereinlass 7 und ein Mischwasserauslass 9 der feststehenden Steuerscheibe 5. Der Mischwassereinlass 7 ist über einen Flüssigkeitskanal 26 des Kartuschenadapters 22 und eine in den Flüssigkeitskanal 26 eingesteckte Mischwasserleitung 27 mit einer Mischvorrichtung 15 verbunden, bei der es sich hier um ein Thermostatventil handelt. Der Mischvorrichtung 15 ist über hier nicht gezeigte Leitungen Kaltwasser und Warmwasser zuführbar, die durch die Mischvorrichtung 15 zu einem vorgemischten Wasser mit einer vorgegebenen Temperatur (von beispielsweise 38 °C) mischbar sind. Das durch die Mischvorrichtung 15 vorgemischte Wasser gelangt über die Mischwasserleitung 27 und den Flüssigkeitskanal 26 bis in den Mischwassereinlass 7 der feststehenden Steuerscheibe 5. Auf der feststehenden Steuerscheibe 5 befindet sich eine bewegliche Steuerscheibe 10, die in der in der Fig. 2 gezeigten Stellung den Mischwassereinlass 7 der feststehenden Steuerscheibe 5 verschließt, sodass das vorgemischte Wasser nicht in eine Mischkammer 14 der beweglichen Steuerscheibe 10 fließen kann. Die bewegliche Steuerscheibe 10 ist über ein Verbindungsstück 23 mit dem Stellhebel 4 gekoppelt. Durch Drehen des in der Fig. 1 gezeigten Bedienhebels 19 um die vertikale Achse 21 ist die bewegliche Steuerscheibe 10 über den Stellhebel 4 zur Einstellung der Mischwassertemperatur um eine (hier senkrechte) Drehachse 24 gegenüber der feststehenden Steuerscheibe 5 drehbar. Durch Schwenken des in der Fig. 1 gezeigten Bedienhebels 19 um die horizontale Achse 20 ist die bewegliche Steuerscheibe 10 über den Stellhebel 4 zur Einstellung der Abgabemenge des Mischwassers in eine (in Bezug auf die Drehachse 24) radiale Richtung 25 gegenüber der feststehenden Steuerscheibe 5 verschiebbar. Durch Verschieben der beweglichen Steuerscheibe 10 in der radialen Richtung 25 nach links ist der Mischwassereinlass 7 der feststehenden Steuerscheibe 5 über die Mischkammer 14 der beweglichen Steuerscheibe 10 mit dem Mischwasserauslass 9 der feststehenden Steuerscheibe 5 verbindbar, sodass das vorgemischte Wasser von dem Mischwassereinlass 7 durch die Mischkammer 14 über den Mischwasserauslass 9 abfließen kann. Der Mischwasserauslass 9 ist mit der in der Fig. 1 gezeigten Auslauföffnung 18 des Armaturengehäuses 17 verbunden. Die Verbindung zwischen dem Mischwassereinlass 7 und dem Mischwasserauslass 9 kommt zustande, wenn die Mischkammer 14 der beweglichen Steuerscheibe 10 sowohl den Mischwassereinlass 7 als auch den Mischwasserauslass 5 zumindest teilweise überdeckt.

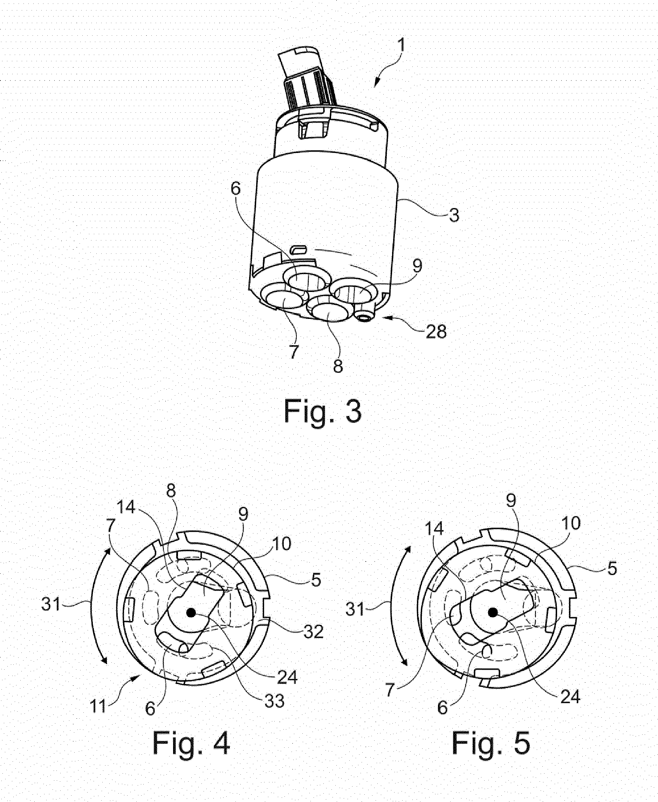

Die Fig. 3 zeigt die Einhebelmischkartusche 1 in einer perspektivischen Darstellung. An einem unteren Ende bzw. längsseitigen Ende 28 des Gehäuses 3 befindet sich ein Kaltwassereinlass 6, der Mischwassereinlass 7, ein Warmwassereinlass 8 und der Mischwasserauslass 9. Der Kaltwassereinlass 6 ist mit einer hier nicht gezeigten Kaltwasserquelle und der Warmwassereinlass 8 über eine in der Fig. 2 zu erkennende Warmwasserleitung 29 mit einer Warmwasserquelle 30 verbindbar.

Die Fig. 4 zeigt die bewegliche Steuerscheibe 10 auf der feststehenden Steuerscheibe 5 in einer Draufsicht aus der in der Fig. 2 mit zwei Pfeilen gekennzeichneten Blickrichtung. Die bewegliche Steuerscheibe 10 befindet sich in der Fig. 4 in einer ersten äußeren Drehstellung 11, in der die bewegliche Steuerscheibe 10 durch den in der Fig. 2 gezeigten Stellhebel 4 in einer Umfangsrichtung 31 entgegen des Uhrzeigersinns um die Drehachse 24 maximal bzw. vollständig gedreht ist. In der ersten äußeren Drehstellung 11 überdeckt die Mischkammer 14 der beweglichen Steuerscheibe 10 den Kaltwassereinlass 6 und den Mischwasserauslass 9 der feststehenden Steuerscheibe 10, sodass die Mischkammer 14 den Kaltwassereinlass 6 mit dem Mischwasserauslass 9 verbindet. Der Kaltwassereinlass 6 erstreckt sich von einer Oberseite 32 der feststehenden Steuerscheibe 5 entgegen des Uhrzeigersinns um die Drehachse 24 zu einer hier nicht sichtbaren gegenüberliegenden Unterseite der feststehenden Steuerscheibe 5, sodass der Kaltwassereinlass 6 nicht parallel zu der Drehachse 24 verläuft. Das auf der Unterseite befindliche Ende 33 des Kaltwassereinlasses 6 ist in der Fig. 4 gestrichelt dargestellt. Der Mischwassereinlass 7 und der Warmwassereinlass 8 der feststehenden Steuerscheibe 5 werden in der ersten äußeren Drehstellung 11 der beweglichen Steuerscheibe 10 vollständig durch die bewegliche Steuerscheibe 10 überdeckt und sind daher geschlossen bzw. nicht mit dem Mischwasserauslass 9 der feststehenden Steuerscheibe 5 verbunden. Das in der ersten äußeren Drehstellung 11 über den Mischwasserauslass 9 abschließende Wasser weist daher eine Temperatur auf, die der Kaltwassertemperatur des über den Kaltwassereinlass 6 einströmenden Kaltwassers entspricht.

Die Fig. 5 zeigt die bewegliche Steuerscheibe 10 auf der feststehenden Steuerscheibe 5 in der gleichen Draufsicht wie in der Fig. 4. Die bewegliche Steuerscheibe 10 wurde in der Fig. 5 im Vergleich zur Fig. 4 durch den in der Fig. 2 gezeigten Stellhebel 4 aus ihrer ersten äußeren Drehstellung 11 um die Drehachse 24 in der Umfangsrichtung 31 im Uhrzeigersinn gedreht, sodass die Mischkammer 14 der beweglichen Steuerscheibe 10 den Kaltwassereinlass 6 der feststehenden Steuerscheibe 5, den Mischwassereinlass 7 der feststehenden Steuerscheibe 5 und den Mischwasserauslass 9 der feststehenden Steuerscheibe 5 überdeckt. Hierdurch kann über den Kaltwassereinlass 6 Kaltwasser und über den Mischwassereinlass 7 vorgemischtes Wasser in die Mischkammer 14 einströmen und sich in der Mischkammer 14 zu einem Mischwasser mischen. Je weiter die bewegliche Steuerscheibe 10 aus ihrer in der Fig. 4 gezeigten ersten äußeren Drehstellung 11 im Uhrzeigersinn um die Drehachse 24 gedreht wird, desto weiter wird der Kaltwassereinlass 6 geschlossen und der Mischwassereinlass 7 geöffnet. Durch das sich ändernde Mischungsverhältnis zwischen dem Kaltwasser und dem vorgemischten Wasser steigt die Mischwassertemperatur des gemischten Mischwassers mit zunehmender Drehung der beweglichen Steuerscheibe 10 im Uhrzeigersinn an.

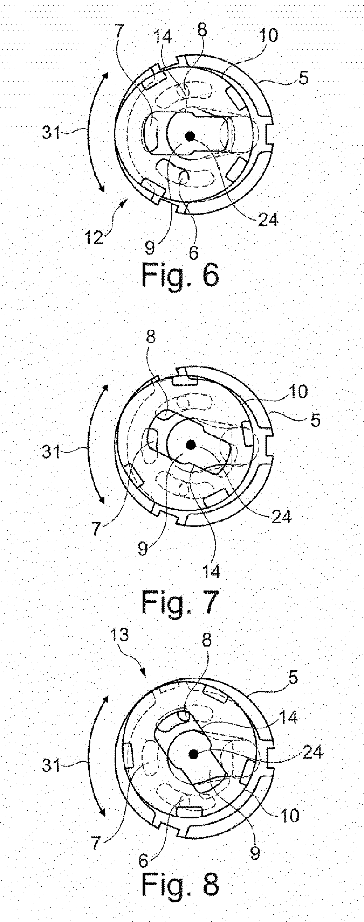

Die Fig. 6 zeigt die bewegliche Steuerscheibe 10 auf der feststehenden Steuerscheibe 5 in der gleichen Draufsicht wie in den Fig. 4 und 5. Die bewegliche Steuerscheibe 10 wurde in der Fig. 6 im Vergleich zur Fig. 5 durch den in der Fig. 2 gezeigten Stellhebel 4 weiter um die Drehachse 24 in der Umfangsrichtung 31 im Uhrzeigersinn gedreht, bis dass die bewegliche Steuerscheibe 10 eine mittlere Drehstellung 12 erreicht hat. In der mittleren Drehstellung 12 verbindet die Mischkammer 14 der beweglichen Steuerscheibe 10 den Mischwassereinlass 7 und den Mischwasserauslass 9. Der Kaltwassereinlass 6 und der Warmwassereinlass 8 der feststehenden Steuerscheibe 5 sind in der mittleren Drehstellung 12 der beweglichen Steuerscheibe 10 durch die bewegliche Steuerscheibe 10 überdeckt und daher verschlossen bzw. nicht mit dem Mischwasserauslass 9 der feststehenden Steuerscheibe 5 verbunden. Das über den Mischwasserauslass 9 abfließende Wasser weist daher eine Temperatur auf, die der durch die in der Fig. 2 gezeigten Mischvorrichtung 15 eingestellten Temperatur des vorgemischten Wassers entspricht. In der mittleren Drehstellung 12 der beweglichen Steuerscheibe 10 befindet sich der Bedienhebel 19 der Sanitärarmatur 2 ebenfalls in einer mittleren Drehstellung, wie in der Fig. 1 gezeigt. In der mittleren Drehstellung des Bedienhebels 19 kann somit durch einen Benutzer der Sanitärarmatur 2 unabhängig von einer Vorlauftemperatur des Warmwassers ein Mischwasser mit einer über die Mischvorrichtung 15 eingestellten und konstanten Mischwassertemperatur gezapft werden. Um ein unbeabsichtigtes weiteres Verstellen der beweglichen Steuerscheibe 10 um die Drehachse 24 in der Umfangsrichtung 31 im Uhrzeigersinn zu verhindern, weist die Sanitärarmatur 2 ein in der Fig. 1 gezeigtes Sicherheitselement 16 auf, das als Kindersicherung und/oder Verbrühschutz dienen kann. Das Sicherheitselement 16 ist in der hier gezeigten Ausführungsvariante der Sanitärarmatur 2 als Stift ausgeführt, der sich durch den Bedienhebel 19 erstreckt und mit seinem in den Bedienhebel 19 ragenden Ende in eine Nut des Armaturengehäuses 17 oder der Einhebelmischkartusche 1 eingreift. Die Nut erstreckt sich in der Umfangsrichtung 31. Bei Erreichen der mittleren Drehstellung 12 der beweglichen Steuerscheibe 10 gelangt der Stift an ein Ende der Nut, sodass ein weiteres Drehen der beweglichen Steuerscheibe 10 im Uhrzeigersinn um die Drehachse 24 verhindert wird. Um ein weiteres Drehen der beweglichen Steuerscheibe 10 im Uhrzeigersinn um die Drehachse 24 ausgehend von ihrer mittleren Drehstellung 12 zu ermöglichen, ist der Stift durch einen Benutzer begrenzt aus dem Bedienhebel 19 und somit aus der Nut herausziehbar. Wird die bewegliche Steuerscheibe 12 um die Drehachse 24 entgegen des Uhrzeigersinns wieder zurück in die mittlere Drehstellung 12 gedreht, schnappt der Stift wieder in die Nut ein, sodass die bewegliche Steuerscheibe 10 wieder gesichert ist.

Die Fig. 7 zeigt die bewegliche Steuerscheibe 10 auf der feststehenden Steuerscheibe 5 in der gleichen Draufsicht wie in den Fig. 4 bis 6. Die bewegliche Steuerscheibe 10 wurde in der Fig. 6 im Vergleich zur Fig. 5 durch den in der Fig. 2 gezeigten Stellhebel 4 aus ihrer mittleren Drehstellung 12 um die Drehachse 24 in der Umfangsrichtung 31 im Uhrzeigersinn gedreht, sodass die Mischkammer 14 der beweglichen Steuerscheibe 10 den Mischwassereinlass 7 der feststehenden Steuerscheibe 5, den Warmwassereinlass 8 der feststehenden Steuerscheibe 5 und den Mischwasserauslass 9 der feststehenden Steuerscheibe 5 überdeckt. Hierdurch kann über den Mischwassereinlass 7 vorgemischtes Wasser und über den Warmwassereinlass 8 Warmwasser in die Mischkammer 14 einströmen und sich in der Mischkammer 14 zu dem Mischwasser mischen. Je weiter die bewegliche Steuerscheibe 10 aus ihrer in der Fig. 5 gezeigten mittleren Drehstellung 12 im Uhrzeigersinn um die Drehachse 24 gedreht wird, desto weiter wird der Mischwassereinlass 7 geschlossen und der Warmwassereinlass 8 geöffnet. Durch das sich ändernde Mischungsverhältnis zwischen dem vorgemischten Wasser und dem Warmwasser steigt die Mischwassertemperatur des gemischten Mischwassers mit zunehmender Drehung der beweglichen Steuerscheibe 10 im Uhrzeigersinn weiter an.

Die Fig. 8 zeigt die bewegliche Steuerscheibe 10 auf der feststehenden Steuerscheibe 5 in der gleichen Draufsicht wie in den Fig. 4 bis 7. Die bewegliche Steuerscheibe 10 wurde in der Fig. 8 im Vergleich zur Fig. 7 durch den in der Fig. 2 gezeigten Stellhebel 4 weiter um die Drehachse 24 in der Umfangsrichtung 31 im Uhrzeigersinn gedreht, bis dass die bewegliche Steuerscheibe 10 eine zweite äußere Drehstellung 13 erreicht hat. In der zweiten äußeren Drehstellung 13 verbindet die Mischkammer 14 der beweglichen Steuerscheibe 10 den Warmwassereinlass 8 und den Mischwasserauslass 9. Der Kaltwassereinlass 6 und der Mischwassereinlass 7 der feststehenden Steuerscheibe 5 sind in der zweiten äußeren Drehstellung 13 der beweglichen Steuerscheibe 10 durch die bewegliche Steuerscheibe 10 überdeckt und daher verschlossen bzw. nicht mit dem Mischwasserauslass 9 der feststehenden Steuerscheibe 5 verbunden. Das über den Mischwasserauslass 9 abfließende Wasser weist daher eine Temperatur auf, die der Vorlauftemperatur bzw. Warmwassertemperatur entspricht. Die Vorlauftemperatur bzw. Warmwassertemperatur kann beispielsweise bis zu 90 °C betragen. Da in der in der Fig. 6 gezeigten mittleren Drehstellung 12 der beweglichen Steuerscheibe 10 kein Wasser in die Mischkammer 14 mit einer höheren Temperatur als der durch die in der Fig. 2 gezeigten Mischvorrichtung 15 eingestellten Temperatur des vorgemischten Wassers strömen kann und ein unbeabsichtigtes Bewegen der beweglichen Steuerscheibe 10 aus der mittleren Drehstellung 12 in Richtung der zweiten äußeren Drehstellung 13 durch das in der Fig. 1 gezeigte Sicherheitselement 16 unterbunden wird, ist ein Verbrühen bei der Benutzung der Sanitärarmatur 2 verhinderbar.

### Bezugszeichenliste

- 1: Einhebelmischkartusche
- 2: Sanitärarmatur
- 3: Gehäuse
- 4: Stellhebel
- 5: feststehende Steuerscheibe
- 6: Kaltwassereinlass
- 7: Mischwassereinlass
- 8: Warmwassereinlass
- 9: Mischwasserauslass
- 10: bewegliche Steuerscheibe
- 11: erste äußere Drehstellung
- 12: mittlere Drehstellung
- 13: zweite äußere Drehstellung
- 14: Mischkammer
- 15: Mischvorrichtung
- 16: Sicherheitselement
- 17: Armaturengehäuse
- 18: Auslauföffnung
- 19: Bedienhebel
- 20: horizontale Achse
- 21: vertikale Achse
- 22: Kartuschenadapter
- 23: Verbindungsstück
- 24: Drehachse
- 25: radiale Richtung
- 26: Flüssigkeitskanal
- 27: Mischwasserleitung
- 28: längsseitiges Ende
- 29: Warmwasserleitung
- 30: Warmwasserquelle
- 31: Umfangsrichtung
- 32: Oberseite
- 33: Ende

## Patentansprüche

1. Einhebelmischkartusche (1) für eine Sanitärarmatur (2), zumindest aufweisend:
- ein Gehäuse (3),
- einen Stellhebel (4), der zumindest teilweise in dem Gehäuse (3) angeordnet ist,
- eine feststehende Steuerscheibe (5), die in dem Gehäuse (3) angeordnet ist und einen Kaltwassereinlass (6) für Kaltwasser, einen Mischwassereinlass (7) für vorgemischtes Wasser und einen Warmwassereinlass (8) für Warmwasser aufweist, und
- eine bewegliche Steuerscheibe (10), die durch den Stellhebel (4) auf der feststehenden Steuerscheibe (5) in eine erste äußere Drehstellung (11), eine mittlere Drehstellung (12) und eine zweite äußere Drehstellung (13) drehbar ist, wobei in der ersten äußeren Drehstellung (11) eine Mischkammer (14) den Kaltwassereinlass (6) mit einem Mischwasserauslass (9), in der mittleren Drehstellung (12) die Mischkammer (14) den Mischwassereinlass (7) mit dem Mischwasserauslass (9) und in der zweiten äußeren Drehstellung (13) die Mischkammer (14) den Warmwassereinlass (8) mit dem Mischwasserauslass (9) verbindet, **dadurch gekennzeichnet, dass** die Einhebelmischkartusche eine zusätzliche Mischvorrichtung (15) aufweist, wobei der Mischwassereinlass (7) mit der Mischvorrichtung (15) verbunden ist, wobei mittels der Mischvorrichtung (15) eine Temperatur des vorgemischten Wassers einstellbar ist, wobei es sich bei der Mischvorrichtung (15) um ein Thermostatventil handelt.

2. Einhebelmischkartusche (1) nach einem der vorhergehenden Patentansprüche, wobei in einer Drehstellung der beweglichen Steuerscheibe (10) zwischen der ersten äußeren Drehstellung (11) und der mittleren Drehstellung (12) Kaltwasser und vorgemischtes Wasser in der Mischkammer (14) zu dem Mischwasser mischbar sind.

3. Einhebelmischkartusche (1) nach einem der vorhergehenden Patentansprüche, wobei in einer Drehstellung der beweglichen Steuerscheibe (10) zwischen der mittleren Drehstellung (12) und der zweiten äußeren Drehstellung (13) vorgemischtes Wasser und Warmwasser in der Mischkammer (14) zu dem Mischwasser mischbar sind.

4. Einhebelmischkartusche (1) nach einem der vorhergehenden Patentansprüche, wobei ein Mischungsverhältnis zwischen dem Kaltwasser und dem vorgemischten Wasser oder zwischen dem vorgemischten Wasser und dem Warmwasser stufenlos einstellbar ist.

5. Einhebelmischkartusche (1) nach einem der vorhergehenden Patentansprüche, wobei die bewegliche Steuerscheibe (10) durch den Stellhebel (4) zum Einstellen einer Durchflussmenge des Mischwassers durch den Mischwasserauslass (9) auf der feststehenden Steuerscheibe (5) verschiebbar ist.

6. Einhebelmischkartusche (1) nach einem der vorhergehenden Patentansprüche, aufweisend ein Sicherheitselement (16), mit dem ein unbeabsichtigtes Verstellen der beweglichen Steuerscheibe (10) von der mittleren Drehstellung (12) in die zweite äußere Drehstellung (13) verhinderbar ist.

## Claims

1. A single-lever mixing cartridge (1) for a sanitary fitting (2), at least having:
- a housing (3),
- an adjusting lever (4), which is arranged at least partially in the housing (3),
- a fixed control disk (5), which is arranged in the housing (3) and has a cold water inlet (6) for cold water, a mixed water inlet (7) for premixed water and a hot water inlet (8) for hot water, and
- a movable control disk (10) which can be rotated by the adjusting lever (4) on the fixed control disk (5) into a first outer rotational position (11), a middle rotational position (12) and a second outer rotational position (13), wherein in the first outer rotational position (11), a mixing chamber (14) connects the cold water inlet (6) to a mixed water outlet (9), in the middle rotational position (12), the mixing chamber (14) connects the mixed water inlet (7) to the mixed water outlet (9), and in the second outer rotational position (13), the mixing chamber (14) connects the hot water inlet (8) to the mixed water outlet (9), **characterized in that** the single-lever mixing cartridge has an additional mixing device (15), wherein the mixed water inlet (7) is connected to the mixing device (15), wherein a temperature of the premixed water is adjustable by means of the mixing device (15), wherein the mixing device (15) is a thermostatic valve.

2. The single-lever mixing cartridge (1) according to any one of the preceding claims, wherein in a rotational position of the movable control disk (10) between the first outer rotational position (11) and the middle rotational position (12), cold water and premixed water can be mixed in the mixing chamber (14) to form the mixed water.

3. The single-lever mixing cartridge (1) according to any one of the preceding claims, wherein in a rotational position of the movable control disk (10) between the middle rotational position (12) and the second outer rotational position (13), premixed water and hot water can be mixed in the mixing chamber (14) to form the mixed water.

4. The single-lever mixing cartridge (1) according to any one of the preceding claims, wherein a mixing ratio between the cold water and the premixed water or between the premixed water and the hot water is continuously adjustable.

5. The single-lever mixing cartridge (1) according to any one of the preceding claims, wherein the movable control disk (10) is displaceable on the fixed control disk (5) by the adjusting lever (4) for adjusting a flow rate of the mixed water through the mixed water outlet (9).

6. The single-lever mixing cartridge (1) according to any one of the preceding claims, having a safety element (16) with which unintentional displacement of the movable control disk (10) from the middle rotational position (12) to the second outer rotational position (13) can be prevented.

## Revendications

1. Cartouche mélangeuse (1) à un seul levier destinée à une robinetterie sanitaire (2), comportant au moins :
- un corps (3),
- un levier de réglage (4), qui est placé au moins partiellement dans le corps (3),
- un disque de commande (5) stationnaire, qui est placé dans le corps (3) et qui comporte une entrée d'eau froide (6) pour de l'eau froide, une entrée d'eau mitigée (7) pour de l'eau pré-mitigée et une entrée d'eau chaude (8) pour de l'eau chaude et
- un disque de commande (10) mobile, qui par le levier de réglage (4) sur le disque de commande (5) stationnaire peut se tourner dans une première position de rotation (11) extérieure, dans une position de rotation (12) médiane et dans une deuxième position de rotation (13) extérieure, dans la première position de rotation (11) extérieure, une chambre de mélange (14) reliant l'entrée d'eau froide (6) avec une sortie d'eau froide (9), dans la position de rotation (12) médiane, la chambre de mélange (14) reliant l'entrée d'eau mitigée (7) avec la sortie d'eau froide (9) et dans la deuxième position de rotation (13) extérieure, la chambre de mélange (14) reliant l'entrée d'eau chaude (8) avec la sortie d'eau froide (9), **caractérisée en ce que** la cartouche mélangeuse à un seul levier comporte un dispositif mélangeur (15) supplémentaire, l'entrée d'eau mitigée (7) étant reliée avec le dispositif mélangeur (15), au moyen du dispositif mélangeur (15), une température de l'eau pré-mitigée étant réglable, le dispositif mélangeur (15) étant une soupape thermostatique.

2. Cartouche mélangeuse (1) à un seul levier selon l'une quelconque des revendications précédentes du brevet, dans une position de rotation du disque de commande (10) mobile entre la première position de rotation (11) extérieure et la position de rotation (12) médiane, de l'eau froide et de l'eau pré-mitigée étant susceptibles d'être mélangées dans la chambre de mélange (14) pour obtenir l'eau mitigée.

3. Cartouche mélangeuse (1) à un seul levier selon l'une quelconque des revendications précédentes du brevet, dans une position de rotation du disque de commande (10) mobile entre la position de rotation (12) médiane et la deuxième position de rotation (13) extérieure, de l'eau mitigée et de l'eau chaude étant susceptibles d'être mélangées dans la chambre de mélange (14) pour obtenir l'eau mitigée.

4. Cartouche mélangeuse (1) à un seul levier selon l'une quelconque des revendications précédentes du brevet, un rapport de mélange entre l'eau froide et l'eau pré-mitigée ou entre l'eau pré-mitigée et l'eau chaude étant réglable en continu.

5. Cartouche mélangeuse (1) à un seul levier selon l'une quelconque des revendications précédentes du brevet, le disque de commande (10) mobile étant déplaçable par le levier de réglage (4) pour le réglage d'un débit de l'eau mitigée à travers la sortie d'eau froide (9) sur le disque de réglage (5) stationnaire.

6. Cartouche mélangeuse (1) à un seul levier selon l'une quelconque des revendications précédentes du brevet, comportant un élément de sécurité (16), permettant d'empêcher un dérèglement intempestif du disque de commande (10) mobile de la position de rotation (12) médiane dans la deuxième position de rotation (13) extérieure.
